(19) Europäisches Patentamt
European Patent Office
Office européen des brevets

(11) **EP 2 151 724 A1**

(12) **EUROPÄISCHE PATENTANMELDUNG**

(43) Veröffentlichungstag:
**10.02.2010 Patentblatt 2010/06**

(51) Int Cl.:
***G05B 19/404*** (2006.01)

(21) Anmeldenummer: **08013942.1**

(22) Anmeldetag: **04.08.2008**

| | |
|---|---|
| (84) Benannte Vertragsstaaten:<br>**AT BE BG CH CY CZ DE DK EE ES FI FR GB GR HR HU IE IS IT LI LT LU LV MC MT NL NO PL PT RO SE SI SK TR**<br>Benannte Erstreckungsstaaten:<br>**AL BA MK RS** | (71) Anmelder: **Siemens Aktiengesellschaft**<br>**80333 München (DE)**<br><br>(72) Erfinder: **Bretschneider, Jochen, Dr.**<br>**73732 Esslingen (DE)** |

(54) **Steuereinrichtung und Verfahren zur Steuerung der Bewegung eines Maschinenelements einer Werkzeugmaschine**

(57)    Die Erfindung betrifft eine Steuereinrichtung zur Steuerung der Bewegung eines Maschinenelements (2) einer Werkzeugmaschine (25), wobei die Steuereinrichtung (24) aufweist,
- eine Sollwerterzeugungseinheit (29) zur Erzeugung von Sollwerten ($x_{soll}$) zur Steuerung der Bewegung des Maschinenelements (2) anhand eines Teileprogramms (13) und
- eine Temperaturkompensationseinheit (15), wobei von der Temperaturkompensationseinheit (15) temperaturkompensierte Sollwerte ($x_{sollk}$) ermittelt werden, indem anhand einer vor und/oder während eines Bearbeitungsvorgangs ermittelten Temperatur (T) und/oder Temperaturverteilung eines Werkstücks (26), die Sollwerte ($x_{soll}$) derart verändert werden, dass eine, infolge einer Temperaturveränderung des Werkstücks (26) eingetretene Änderung einer Abmessung (1) des Werkstücks kompensiert wird. Weiterhin betrifft die Erfindung ein diesbezügliches Verfahren zur Steuerung der Bewegung eines Maschinenelements (2) einer Werkzeugmaschine (25). Die Erfindung ermöglicht temperaturbedingte Fehler, die bei der Bearbeitung eines Werkstücks (26) durch eine Werkzeugmaschine (25) auftreten, zu reduzieren.

FIG 1

**Beschreibung**

Die Erfindung betrifft eine Steuereinrichtung zur Steuerung der Bewegung eines Maschinenelements einer Werkzeugmaschine.

Weiterhin betrifft die Erfindung ein Verfahren zur Steuerung der Bewegung eines Maschinenelements einer Werkzeugmaschine.

Werkzeugmaschinen weisen zur Steuerung der Bewegung eines Maschinenelements, wie z.B. einer rotierenden Spindel, eine Steuereinrichtung auf. Die Steuereinrichtung steuert dabei die Bewegung des Maschinenelements (lineare und rotatorische Bewegung) anhand eines Teileprogramms, das in Form von Befehlen die durchzuführenden Bewegungen des Maschinenelements zur Bearbeitung eines Werkstücks enthält.

Bei der Erstellung des Teileprogramms wird dabei üblicherweise eine bestimmte Referenztemperatur $T_R$ angenommen, die das Werkstück aufweist. Es wird solchermaßen von einer festen Geometrie des Werkstücks ausgegangen.

In der Realität weicht jedoch die Temperatur am Umgebungsort der Werkzeugmaschine (z.B. in der Werkshalle) oft erheblich von der bei der Erstellung des Teileprogramms angenommenen Referenztemperatur ab. Weiterhin kann sich auch während des Bearbeitungsvorgangs durch den Bearbeitungsvorgang (z.B. Fräsen) selber sich, z.B. die Temperatur des Werkstücks verändern, insbesondere erhöhen.

Infolge der durch die Temperaturveränderung bedingten Änderung der Abmessungen des Werkstücks entstehen somit temperaturbedingte Fehler, wie z.B. Abweichungen von der gewünschten Geometrie des Werkstücks beim Bearbeiten des Werkstücks.

Zwar unterliegen auch die Werkzeugmaschinen einem Temperaturgang, der abhängig ist vom Material der Werkzeugmaschine und dem Material der eingesetzten Linearmaßstäbe und der im Allgemeinen in einen Bereich von 9 bis 12 µm/m/°C liegt. Häufig weisen jedoch die zu bearbeitenden Werkstücke einen von der Werkzeugmaschine unterschiedlichen Längenausdehnungskoeffizienten aus, so dass sich in der Praxis, infolge der unterschiedlichen Wärmeausdehnung, Ungenauigkeiten in der Bearbeitung des Werkstücks ergeben. Weiterhin erwärmt sich in der Regel das Werkstück während des Bearbeitungsvorgangs zusätzlich, was ebenfalls zu Ungenauigkeiten bei der Bearbeitung des Werkstücks führt.

Eine bekannte Möglichkeit eine Reduzierung von temperaturbedingten Abweichungen bei der Bearbeitung des Werkstücks zu erzielen ist die Werkzeugmaschine und die Werkstücke in eine klimageregelten Umgebung aufzustellen, d.h. der Bearbeitungsvorgang findet, z.B. bei der im Teileprogramm angenommenen Referenztemperatur $T_R$ von 20°C, statt. Eine solche Lösung ist zum Einen sehr teuer, da im Prinzip eine ganze Werkshalle klimatisiert werden muss und zum Anderen können Längenausdehnungen, die sich infolge einer Temperaturerhöhung eines Werkstücks durch den Bearbeitungsvorgang selbst ergeben, nicht ausgeglichen werden.

Weiterhin ist auch bekannt die Maschinenstruktur durch innen liegende Kühlkanäle zur Durchleitung von Kühl- und/oder Schmierstoffen zu kühlen, sowie das Werkstück mit temperierten Kühl- und/oder Schmierstoffen zu kühlen. In der Praxis ist heute jedoch eine Trockenbearbeitung des Werkstücks erwünscht.

Weiterhin kann auch schon im Teileprogramm eine gezielte Verschiebung von Bearbeitungspunkten durch sogenannte R-Parameter (anwendbar für Serienfertigung auf einer thermisch eingeschwungenen Werkzeugmaschine bei gleicher Umgebungstemperatur) im Teileprogramm vorgegeben werden. Hierbei werden im Teileprogramm kleine Verschiebungen der Arbeitsposition vorgenommen. Dabei werden die Verschiebungen empirisch durch Messungen am Werkstück ermittelt. Änderungen der Umgebungsbedingungen erfordern dabei andere Verschiebungswerte. Infolge unterschiedlicher Jahreszeiten bedingte Schwankungen der Umgebungstemperatur der Werkzeugmaschine und damit Schwankungen der Temperatur der Werkstücke, sowie Temperaturveränderungen, die vom Bearbeitungsvorgang des Werkstücks herrühren, werden jedoch auch hier nicht berücksichtigt.

Es ist Aufgabe der Erfindung temperaturbedingte Fehler, die bei der Bearbeitung eines Werkstücks durch eine Werkzeugmaschine auftreten, zu reduzieren.

Diese Aufgabe wird gelöst durch eine Steuereinrichtung zur Steuerung der Bewegung eines Maschinenelements einer Werkzeugmaschine, wobei die Steuereinrichtung aufweist,

- eine Sollwerterzeugungseinheit zur Erzeugung von Sollwerten zur Steuerung der Bewegung des Maschinenelements anhand eines Teileprogramms und
- eine Temperaturkompensationseinheit, wobei von der Temperaturkompensationseinheit temperaturkompensierte Sollwerte ermittelt werden, indem anhand einer vor und/oder während eines Bearbeitungsvorgangs ermittelten Temperatur und/oder Temperaturverteilung eines Werkstücks, die Sollwerte derart verändert werden, dass eine, infolge einer Temperaturveränderung des Werkstücks eingetretene Änderung einer Abmessung des Werkstücks kompensiert wird.

Weiterhin wird diese Aufgabe gelöst durch ein Verfahren zur Steuerung der Bewegung eines Maschinenelements einer Werkzeugmaschine, wobei Sollwerte zur Steuerung der Bewegung des Maschinenelements anhand eines Teileprogramms erzeugt werden, wobei temperaturkompensierte Sollwerte ermittelt werden, indem anhand einer vor und/oder während eines Bearbeitungsvorgangs ermittelten Temperatur und/oder Temperaturverteilung eines Werkstücks, die Sollwerte derart verändert werden, dass eine, infolge einer Temperaturveränderung des Werkstücks eingetretene Änderung einer Abmessung des Werkstücks kompensiert wird.

Vorteilhafte Ausbildungen der Erfindung ergeben sich aus den abhängigen Ansprüchen.

Vorteilhafte Ausbildung der Steuereinrichtung ergeben sich analog zur vorteilhaften Ausbildung des Verfahrens und umgekehrt.

Es erweist sich als vorteilhaft, wenn die Werkzeugmaschine eine Temperaturmesseinrichtung zur Ermittelung der Temperatur und/oder der Temperaturverteilung des Werkstücks aufweist. Hierdurch kann die Temperatur und/oder die Temperaturverteilung des Werkstücks unmittelbar vor und/oder während eines Bearbeitungsvorgangs ermittelt werden.

Ferner erweist es sich als vorteilhaft, wenn die Temperaturmesseinrichtung an einem Spindelgehäuse der Werkzugmaschine oder an einer Werkstückeinspannvorrichtung der Werkzugmaschine angeordnet ist. Wenn die Temperaturmesseinrichtung am Spindelgehäuse angebracht ist, können am Ort der Bearbeitung auftretende Temperaturveränderungen gemessen werden. Wenn die Temperaturmesseinrichtung an der Werkstückhaltevorrichtung der Werkzeugmaschine angeordnet ist, kann auf besonders einfache Art und Weise auftretende Temperaturveränderungen des Werkstücks gemessen werden.

Ferner erweist es sich als vorteilhaft, wenn die Temperaturmesseinrichtung als Wärmebildkamera oder als Temperatursensor, der die Temperatur des Werkstücks an einer Stelle ermittelt ausgebildet ist. Mit Hilfe einer Wärmebildkamera lässt sich auf einfache Art und Weise berührungslos die Temperatur und/oder die Temperaturverteilung des Werkstücks messen. Eine Ausbildung der Temperaturmesseinrichtung als Temperatursensor der die Temperatur des Werkstücks an einer Stelle misst, stellt eine besonders einfache und kostengünstige Ausbildung der Temperaturmesseinrichtung dar.

Ein Ausführungsbeispiel der Erfindung ist in der Zeichnung dargestellt und wird im Folgenden anhand einer Zeichnung erläutert. Dabei zeigen:

FIG 1    eine Werkzeugmaschine mit einer Temperaturmesseinrichtung und

FIG 2    eine erfindungsgemäße Steuereinrichtung.

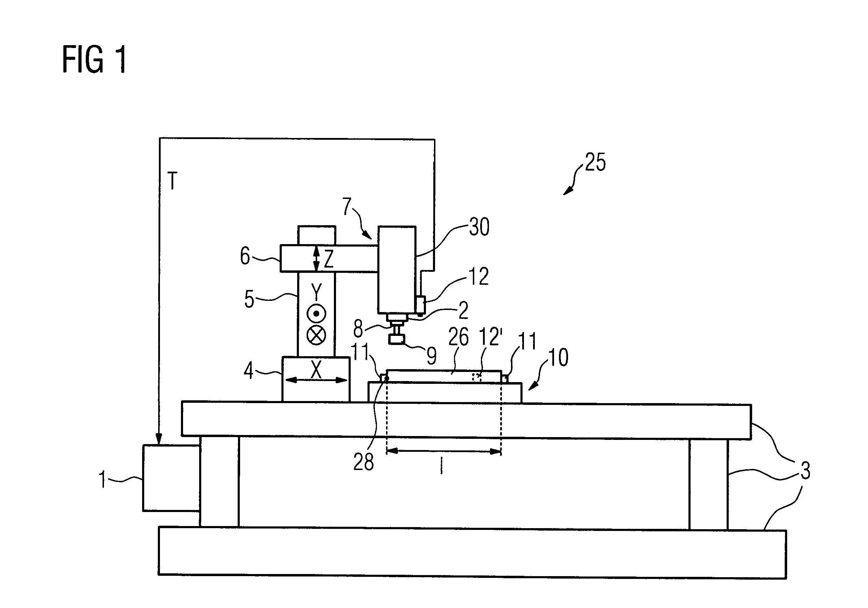

In FIG 1 ist in Form einer schematisierten Darstellung eine Werkzeugmaschine 25 dargestellt. Die Werkzeugmaschine 25 weist ein ruhendes Maschinengestell 3 auf, auf dem ein Querträger 4 in X-Richtung linear verfahrbar ist. Auf dem Querträger 4 ist eine Säule 5 angeordnet, die in Y-Richtung linear verfahrbar ist. Die Säule 5 bildet dabei eine Führung für einen Querhalter 6, der in Z-Richtung verfahrbar ist. Am Querhalter 6 ist ein Spindelmotor 7 befestigt. Der Spindelmotor 7 weist ein Spindelgehäuse 30, in dem eine drehbar gelagerte Spindel 2 angeordnet ist, auf. Der Spindelmotor 7 treibt die Spindel 2 an. Die Spindel 2 stellt dabei im Rahmen des Ausführungsbeispiels ein Maschinenelement der Werkzeugmaschine 25 dar. Die Spindel 2 weist eine Werkzeugaufnahmevorrichtung 8 auf, in die ein Werkzeug 9, das im Rahmen des Ausführungsbeispiels als ein Fräser ausgebildet ist, eingespannt ist. Die zur Bewegung des Querhalters 6, der Säule 5 und des Querträgers 4 notwendigen Motoren sind der Übersichtlichkeit halber, und da zum Verständnis der Erfindung unwesentlich in FIG 1, nicht dargestellt. Zur Steuerung und Regelung der Bewegung des Maschinenelements, das im Rahmen des Ausführungsbeispiels in Form der Spindel 2 ausgebildet ist, weist die Werkzeugmaschine 25 eine Steuer- und Regelvorrichtung 1 auf, die sowohl in X-,Y- und Z-Richtung lineare Bewegungsvorgänge der Spindel 2, als auch die Drehbewegung der Spindel 2 steuert und regelt.

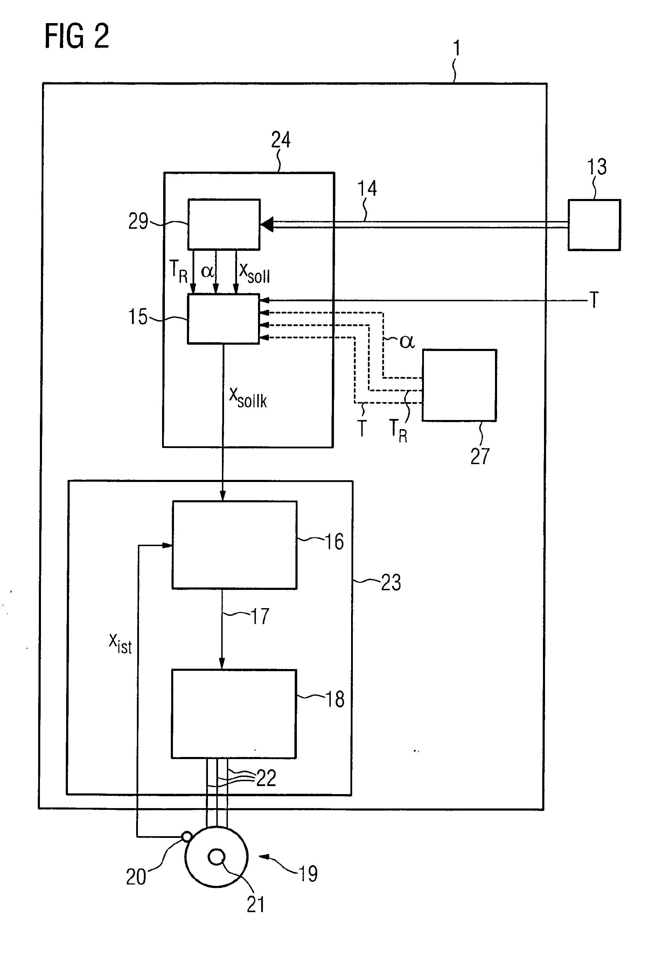

Weiterhin weist die Werkzeugmaschine 25 eine am Maschinengestell 3 angeordnete Werkstückeinspannvorrichtung 10 auf, die zwei Spannbacken 11 aufweist. Über die zwei Spannbacken 11 ist ein längliches Werkstück 26, das im Rahmen eines Bearbeitungsvorgangs bearbeitet werden soll, eingespannt. Zur Messung der Temperatur T des Werkstücks 26 weist die Werkzeugmaschine 25 eine an dem Spindelgehäuse 30 angeordnete Temperaturmesseinrichtung 12 auf, die im Rahmen des Ausführungsbeispiels in Form einer Wärmebildkamera ausgebildet ist. Die Wärmebildkamera misst vorzugsweise an einer bestimmten Stelle die Temperatur T des Werkstücks und übermittelt diese an die Steuer- und Regelvorrichtung 1 und insbesondere an die in FIG 2 dargestellte Steuereinrichtung 24. Die Temperaturmesseinrichtung 12 kann aber z.B. auch als ein einfacher Temperatursensor ausgebildet sein, der berührungslos oder mit Berührung des Werkstücks an einer bestimmten Stelle des Werkstücks die Temperatur des Werkstücks misst. Die Temperaturmesseinrichtung 12 braucht dabei nicht unbedingt, wie im Ausführungsbeispiel gemäß FIG 1 dargestellt, am Spindelgehäuse 30 angeordnet sein, sondern sie kann z.B. auch an der Werkstückeinspannvorrichtung 10 angeordnet sein, was in FIG 1 durch das Bezugszeichen 12' dargestellt ist.

In FIG 2 ist die Steuer- und Regelvorrichtung 1 in Form eines Blockschaltbildes detaillierter dargestellt. Die Steuer- und Regelvorrichtung 1 weist zur Steuerung der Bewegung des Maschinenelementes, dass wie schon gesagt, im Rahmen des Ausführungsbeispiels in Form der Spindel 2 ausgebildet ist, eine Steuereinrichtung 24 auf, die z.B. in Form einer numerischen Steuerung (NC) der Werkzeugmaschine vorliegen kann. Die Steuereinrichtung 24 weist zur Steuerung der Bewegung des Maschinenelements eine Sollwerterzeugungseinheit 29 auf, die ein Teileprogramm 13 einliest, was durch einen Pfeil 14 in FIG 2 dargestellt ist. Entsprechend dem im Teileprogramm hinterlegten Befehlen zur Steuerung der Bewegung des Maschinenelements werden von der Sollwerterzeugungseinheit 29 zur Steuerung der Bewegung der Spindel 2 Lagesollwerte $x_{soll}$ für jede Bewegungsrichtung des Maschinenelements 2 erzeugt. So erzeugt z.B. die Sollwerterzeugungseinheit 29 zur Bewegung der Spindel 2 in X-Richtung Lagesollwerte $x_{soll}$. Die Lagesollwerte werden dabei z.B. alle Millisekunden erzeugt.

Bei handelsüblichen Werkzeugmaschinen werden die solchermaßen erzeugten Lagesollwerte $x_{soll}$ als Sollregelgröße an eine Regeleinrichtung 16 übermittelt. Entsprechend den Lagesollwerten $x_{soll}$ und den mittels eines Lagegebers 20 gemessenen Lageistwerten $x_{ist}$ der Motorwelle 21 wird von der Regeleinrichtung 16 einen Stromrichter 18 angesteuert, was durch einen Pfeil 17 dargestellt ist. Der Stromrichter 18 erzeugt die zum Betrieb des Motors 19 notwendigen elektrischen Spannungen und steuert über eine Verbindung 22 den Motor 19 an. Der Motor 19 treibt dann, z.B. im Rahmen des Ausführungsbeispiels, den Querträger 4 gemäß FIG 1 in X-Richtung an. Die Regeleinrichtung 16 und der Stromrichter 18 bilden eine Antriebseinrichtung 23. Die Werkzeugmaschine 25 weist dabei für jede Bewegungsrichtung X, Y und Z, sowie zur Durchführung der rotierenden Bewegung der Spindel 2 jeweils eine zugehörige Antriebseinrichtung und einen zugehörigen Motor auf, die jedoch der Übersichtlichkeit halber in FIG 2 nicht dargestellt sind. Entsprechend erzeugt die Sollwerterzeugungseinheit 12 für jede Antriebseinrichtung entsprechend zugehörige Sollwerte, insbesondere Lagesollwerte.

Erfindungsgemäß weist die Steuereinrichtung 24 eine Temperaturkompensationseinheit 15 auf, wobei von der Temperaturkompensationseinheit 15, im Rahmen des Ausführungsbeispiels, temperaturkompensierte Lagesollwerte $x_{sollk}$ ermittelt werden, indem anhand einer unmittelbar vor und/oder während eines Bearbeitungsvorgangs gemessenen Temperatur T des Werkstücks 26 die Lagesollwerte $x_{soll}$ derart verändert werden, dass eine infolge einer Temperaturveränderung des Werkstücks gegenüber einer Referenztemperatur eingetretene Änderung einer Abmessung, d.h. im Rahmen des Ausführungsbeispiels der Länge 1 des Werkstücks, bei der Bewegung des Maschinenelements kompensiert wird. Temperaturbedingte Fehler, wie z.B. Abweichungen der Abmessungen des fertig bearbeiteten Werkstücks von der gewünschten Geometrie des Werkstücks, werden hierdurch reduziert. Die Temperaturmesseinrichtung 12 übermittelt im Rahmen des Ausführungsbeispiels unmittelbar vor (z.B. eine Sekunde vor) und während des Bearbeitungsvorgangs die von der Temperaturmesseinrichtung 12 gemessene Temperatur T an die Temperaturkompensationseinheit 15. Weiterhin werden im Rahmen des Ausführungsbeispiels von der Sollwerterzeugungseinheit 29 eine Referenztemperatur $T_R$, auf die sich die Lagesollwerte $x_{soll}$, welche von der Sollwerterzeugungseinheit 29 ausgegeben werden beziehen und der Längenausdehnungskoeffizient $\alpha$ des Materials des zu bearbeitenden Werkstücks an die Temperaturkompensationseinheit 15 übermittelt. Im Rahmen des Ausführungsbeispiels sind dabei die Referenztemperatur $T_R$ (z.B. 20°C) und der Längenausdehnungskoeffizient $\alpha$ im Teileprogramm 13 hinterlegt und werden von der Sollwerterzeugungseinheit 29 mit eingelesen. Alternativ oder zusätzlich ist es jedoch z.B. auch möglich, die Referenztemperatur $T_R$ und/oder der Längenausdehnungskoeffizient $\alpha$ über eine Bedieneinrichtung 27 zur Bedienung der Werkzeugmaschine vom Anwender per Hand einzugeben. Die Referenztemperatur $T_R$ und/oder der Längenausdehnungskoeffizient $\alpha$ werden dann von der Bedieneinrichtung 27 an die Temperaturkompensationseinheit 15 übermittelt, was durch gestrichelt gezeichnete Pfeile in FIG 2 dargestellt ist.

Die Temperaturkompensationseinheit 15 ermittelt dabei im Rahmen des Ausführungsbeispiels gemäß der Beziehung

$$x_{sollk} = x_{soll} + x_{soll} \cdot \alpha \cdot (T - T_R) \tag{1}$$

temperaturkompensierte Lagesollwerte $x_{sollk}$. Die Kompensation wird dabei für die jeweilige Abmessung des Werkstücks 26 in jeder Bewegungsrichtung X, Y und Z durchgeführt. Der Koordinatennullpunkt 28 ($x_{soll} = 0$) ist dabei im Rahmen des Ausführungsspiels auf das linksseitige Ende des Werkstücks 26 gelegt. Die temperaturkompensierten Lagesollwerte $x_{sollk}$ werden anschließend von der Temperaturkompensationseinheit 15 an die Regeleinrichtung 16 übermittelt.

Es ist weiterhin aber auch möglich, temperaturkompensierte Sollwerte durch Verwendung von komplexen Temperaturmodellen, die die Änderungen der Abmessungen bei einer Temperatur T des Werkstücks gegenüber den Abmessungen des Werkstücks bei einer Referenztemperatur $T_R$ bestimmen, zu ermitteln. Insbesondere wenn die Temperaturmesseinrichtung in Form einer Wärmebildkamera ausgebildet ist, die nicht nur die Temperatur an einer bestimmten Stelle des Werkstücks messen kann, sondern die Temperaturverteilung des Werkstücks, d.h. die Temperatur an vielen Stellen des Werkstücks gleichzeitig messen kann, bietet sich der Einsatz von Temperaturmodellen an, die anhand einer gemessenen Temperaturverteilung die hieraus resultierende Änderung der Abmessungen des Werkstücks genau ermitteln.

Die Temperaturkompensation der Werkstückausdehnung erfolgt solchermaßen anhand der Eingangsgrößen durch lineare oder nichtlineare Koordinatentransformation der programmierten Werkstückkoordinaten ausgehend von einem Bezugspunkt, der im Rahmen des Ausführungsbeispiels durch den Koordinatennullpunkt 28 gegeben ist. Im einfachsten Fall können dabei z.B. NC-Standartoperation wie Verschiebung (TRANS), Skalierung (SCALE) und Rotation (ROT) zum Einsatz kommen.

Es sei an dieser Stelle angemerkt, dass die Temperatur und/oder die Temperaturverteilung des Werkstücks nicht unbedingt über eine an der Werkzeugmaschine fest angebrachte Temperaturmesseinrichtung 12 ermittelt werden muss. So kann diese, z.B. vor dem Bearbeitungsvorgang z.B. von dem Bediener der Werkzeugmaschine per Hand mittels einer externen Temperaturmesseinrichtung gemessen werden und über die Bedieneinrichtung 27 per Hand eingegeben werden. Die Temperatur wird, dann von der Bedieneinrichtung 27 an die Temperaturkompensationseinheit 15 übermittelt, was in FIG 2 durch einen gestrichelt gezeichneten Pfeil dargestellt ist.

Da im Rahmen des Ausführungsbeispiels die Temperatur T nicht nur unmittelbar vor dem Bearbeitungsvorgang sondern auch während des Bearbeitungsvorgangs gemessen wird, können auch beim Bearbeitungsvorgang auftretende Temperaturveränderungen des Werkstücks bei der Kompensation der Sollwerte berücksichtigt werden.

Weiterhin sei an dieser Stelle angemerkt, dass die Sollwerte nicht unbedingt wie im Ausführungsbeispiel in Form von Lagesollwerten vorliegen müssen, sondern z.B. auch in Form von Geschwindigkeitssollwerten, Beschleunigungssollwerten oder Rucksollwerten vorliegen können.

## Patentansprüche

1. Steuereinrichtung zur Steuerung der Bewegung eines Maschinenelements (2) einer Werkzeugmaschine (25), wobei die Steuereinrichtung (24) aufweist,

   - eine Sollwerterzeugungseinheit (29) zur Erzeugung von Sollwerten ($x_{soll}$) zur Steuerung der Bewegung des Maschinenelements (2) anhand eines Teileprogramms (13) und
   - eine Temperaturkompensationseinheit (15), wobei von der Temperaturkompensationseinheit (15) temperaturkompensierte Sollwerte ($x_{sollk}$) ermittelt werden, indem anhand einer vor und/oder während eines Bearbeitungsvorgangs ermittelten Temperatur (T) und/oder Temperaturverteilung eines Werkstücks (26), die Sollwerte ($x_{soll}$) derart verändert werden, dass eine, infolge einer Temperaturveränderung des Werkstücks (26) eingetretene Änderung einer Abmessung (1) des Werkstücks kompensiert wird.

2. Werkzeugmaschine mit einer Steuereinrichtung nach Anspruch 1, **dadurch gekennzeichnet, dass** die Werkzeugmaschine (25) eine Temperaturmesseinrichtung (12,12') zur Ermittelung der Temperatur (T) und/oder der Temperaturverteilung des Werkstücks aufweist.

3. Werkzeugmaschine nach Anspruch 2, **dadurch gekennzeichnet, dass** die Temperaturmesseinrichtung (12,12') an einem Spindelgehäuse (30) der Werkzugmaschine oder an einer Werkstückeinspannvorrichtung (10) der Werkzugmaschine (25) angeordnet ist.

4. Werkzeugmaschine nach Anspruch 2 oder 3, **dadurch gekennzeichnet, dass** die Temperaturmesseinrichtung (12,12') als Wärmebildkamera oder als Temperatursensor, der die Temperatur (T) des Werkstücks (26) an einer Stelle ermittelt ausgebildet ist.

5. Verfahren zur Steuerung der Bewegung eines Maschinenelements (2) einer Werkzeugmaschine (25), wobei Sollwerte ($x_{soll}$) zur Steuerung der Bewegung des Maschinenelements (2) anhand eines Teileprogramms (13) erzeugt werden, wobei temperaturkompensierte Sollwerte ($x_{sollk}$) ermittelt werden, indem anhand einer vor und/oder während eines Bearbeitungsvorgangs ermittelten Temperatur (T) und/oder Temperaturverteilung eines Werkstücks (26), die Sollwerte ($x_{soll}$) derart verändert werden, dass eine, infolge einer Temperaturveränderung des Werkstücks (26) eingetretene Änderung einer Abmessung des Werkstücks (26) kompensiert wird.

FIG 1

FIG 2

Europäisches Patentamt
European Patent Office
Office européen des brevets

# EUROPÄISCHER RECHERCHENBERICHT

**Nummer der Anmeldung**

EP 08 01 3942

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 198 00 033 A1 (ELB SCHLIFF WERKZEUGMASCHINEN [DE]) 15. Juli 1999 (1999-07-15) * das ganze Dokument * ----- | 1-5 | INV. G05B19/404 |
| X | WO 2004/076120 A (MAUS S P A [IT]; SAMMARTIN ROBERTO [IT]) 10. September 2004 (2004-09-10) * das ganze Dokument * ----- | 1-5 | |
| X | US 2004/066831 A1 (SHIVASWAMY SATISH [US] ET AL) 8. April 2004 (2004-04-08) * Abbildung 5 * * Absätze [0001] - [0009] * * Absätze [0017], [0025], [0026] * * Absätze [0065] - [0068] * ----- | 1-5 | |
| X | DE 44 29 654 A1 (HESSISCHE APPARATEBAU [DE]) 22. Februar 1996 (1996-02-22) * das ganze Dokument * ----- | 1-5 | |
| X | DE 27 41 754 A1 (HEYLIGENSTAEDT & CO) 29. März 1979 (1979-03-29) * das ganze Dokument * ----- | 1-5 | RECHERCHIERTE SACHGEBIETE (IPC) G05B |
| A | DE 42 33 035 C1 (DAIMLER-BENZ AKTIENGESELLSCHAFT, 7000 STUTTGART, DE) 22. Juli 1993 (1993-07-22) * Zusammenfassung * * Spalte 2, Zeile 58 - Spalte 3, Zeile 17 * ----- | 4 | |

Der vorliegende Recherchenbericht wurde für alle Patentansprüche erstellt

| Recherchenort | Abschlußdatum der Recherche | Prüfer |
|---|---|---|
| München | 15. Dezember 2008 | Schriefl, Josef |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 01 3942

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-12-2008

| Im Recherchenbericht angeführtes Patentdokument | Datum der Veröffentlichung | Mitglied(er) der Patentfamilie | Datum der Veröffentlichung |
|---|---|---|---|
| DE 19800033 A1 | 15-07-1999 | KEINE | |
| WO 2004076120 A | 10-09-2004 | CN 1756621 A<br>EP 1597018 A1<br>KR 20050102682 A<br>MX PA05009081 A<br>US 2006060038 A1 | 05-04-2006<br>23-11-2005<br>26-10-2005<br>19-05-2006<br>23-03-2006 |
| US 2004066831 A1 | 08-04-2004 | KEINE | |
| DE 4429654 A1 | 22-02-1996 | KEINE | |
| DE 2741754 A1 | 29-03-1979 | KEINE | |
| DE 4233035 C1 | 22-07-1993 | KEINE | |

EPO FORM P0461

Für nähere Einzelheiten zu diesem Anhang : siehe Amtsblatt des Europäischen Patentamts, Nr.12/82